# FASCICULE DE BREVET EUROPEEN

(11) **EP 0 739 593 B1**
(45) Date de publication et mention de la délivrance du brevet: **28.03.2001**
(21) Numéro de dépôt: 95810657.7
(22) Date de dépôt: 24.10.1995
(51) Int. Cl.: A23K 1/00, A23N 17/00, A21C 3/04, A23P 1/12, A23L 1/16

(54) **Procédé de fabrication de céréales cuites**
Verfahren zur Herstellung von gekochten Getreideprodukten
Process for the fabrication of cooked cereals

(30) Priorité: 28.04.1995 US 430551
(43) Date de publication de la demande: 30.10.1996
(73) Titulaire: SOCIETE DES PRODUITS NESTLE S.A., 1800 Vevey (CH)
(72) Inventeur: Geromini, Osvaldo, CH-1358 Valeyres, Rances (CH); Heck, Ernst, CH-1302 Vufflens La Ville (CH); Huet, Jean Noel, 04619-004 Sao Paulo-SP (BR); Martin, Thierry, F-80000 Amiens (FR); Pfaller, Werner, CH-1350 Orbe (CH)
(74) Mandataire: Wavre, Claude-Alain

(56) Documents cités:
- EP-A- 0 524 329
- EP-A- 0 545 056
- EP-A- 0 682 875
- WO-A-90/05452

## Description

### Domaine de l'invention

L'objet de la présente invention est un procédé de fabrication de céréales cuites ou d'aliments secs pour animaux, comprenant la préparation d'un mélange d'eau et d'un mélange préalable sec de farine ou de semoule de céréale, la cuisson du mélange et son extrusion, ainsi qu'un appareil destiné à mettre en oeuvre le procédé.

### Arrière-plan technique de l'invention

Différents procédés sont connus, qui comprennent au moins une étape de cuisson par extrusion d'un mélange d'eau et d'un mélange préalable sec comprenant principalement de la farine ou de la semoule de céréale.

Le brevet n° AU-A-4 591 389 (GERBER PRODUCTS COMPANY) décrit un procédé de production de céréales instantanées, comprenant le mouillage d'un mélange sec comprenant principalement une farine de céréale et de l'huile et des vitamines additionnelles, la cuisson par extrusion du mélange mouillé en un cordon dilaté, le tranchage du cordon en boulettes, le broyage et le tamisage des boulettes pour obtenir une taille de particules semblables à une poudre fine, et l'agglomération des particules en granules.

Le brevet n° EP-A-0 524 329 (SOCIETE DES PRODUITS NESTLE S.A.) décrit un procédé de fabrication d'aliments céréaliers précuits par cuisson par extrusion d'un mélange mouillé de céréales, dans lequel un gaz comprimé est injecté dans le mélange à la fin de l'étape de cuisson, juste avant l'étape d'extrusion.

En outre, de nombreuses utilisations de pompes à engrenages sont connues, par exemple pour amener des quantités précisément dosées de matières alimentaires dans un appareil de coextrusion relativement complexe.

La demande de brevet EP-A-0 682 875 (SOCIÉTÉ DES PRODUITS NESTLÉ) décrit un procédé de fabrication de pâtes alimentaires par pétrissage et extrusion d'un mélange de farine ou de semoule de céréales et d'eau à travers une filière grâce à une pompe à engrenage. Le procédé mis en oeuvre ne prévoit pas de cuisson du mélange, au contraire la température est maintenue inférieure à 50 °C.

Le brevet n° EP-A-0 202 143 (NABISCO BRANDS INC.) décrit une coextrudeuse à triple effet capable de coextruder coaxialement deux pâtes à cuire ayant différentes compositions et textures, séparées par une couche de matière à base d'huile servant de barrière d'humidité, les pâtes et la matière à base d'huile étant dosées dans des parties de buses respectives de la. coextrudeuse grâce à des pompes à engrenages, par exemple.

Le brevet n° EP-A-0 280 484 (KOBAYASHI, MASAO) décrit un appareil de coextrusion capable de former un produit alimentaire globulaire en enveloppant une matière centrale d'une ou de plusieurs couches d'autres matières alimentaires, dans lequel les différentes matières sont aussi dosées dans des parties de buses respectives de l'appareil de coextrusion grâce à des pompes à engrenages, par exemple.

### Résumé de l'invention

Le but de la présente invention est de réaliser un procédé de fabrication de céréales cuites ou d'aliments secs pour animaux et un appareil destiné à mettre en oeuvre le procédé, qui consomme relativement peu d'énergie et qui soumet ledit mélange à des forces de cisaillement relativement faibles.

A cet effet, le procédé de fabrication de céréales cuites ou d'aliments secs pour animaux selon la présente invention, qui comprend la préparation d'un mélange d'eau et d'un mélange préalable sec comprenant principalement de la farine ou de la semoule de céréale, la cuisson du mélange et son extrusion, se distingue lui-même par le fait que le mélange cuit est extrudé en étant pressé à travers une filière à extrusion à l'aide d'une pompe à engrenages.

Similairement, l'appareil destiné à mettre en oeuvre le procédé selon la présente invention, comprend un dispositif de mélange et/ou de cuisson, une pompe à engrenages et une filière à extrusion.

Dans les présentes spécification et revendications, l'expression "comprenant principalement de la farine ou de la semoule de céréale" signifie comprenant au moins 50 % ou préférablement au moins 80 % de farine ou de semoule de céréale.

Similairement, l'expression "un mélange d'eau et un mélange préalable sec" signifie "soit un mélange d'eau et de mélange préalable sec ou un mélange de vapeur, d'eau et de mélange préalable sec".

Il a été observé, de façon surprenante, qu'il était possible de fabriquer des céréales cuites ou des aliments secs pour animaux qui présentaient de remarquables propriétés organoleptiques, spécialement en ce qui concerne leur texture et leur saveur, tout en consommant relativement peu d'énergie et en soumettant le mélange d'eau et de matière céréalière à des forces de cisaillement relativement faibles, en dépit du fait que ce mélange passait à travers une pompe a engrenages et qu'il y était brièvement soumis à une compression brutale.

Précisément, entre les dents d'une pompe à engrenages comprenant deux roues ou rouleaux dentés qui s'engrènent mutuellement, le mélange peut être soumis à une compression de plusieurs centaines de bars pendant une fraction de seconde, par exemple.

Pour mettre en oeuvre le présent procédé de fabrication de céréales cuites, il est possible de préparer un mélange préalable sec, comprenant 80-88 % d'une farine ou d'une semoule d'une céréale telle que le blé, l'avoine, le maïs ou le riz, 2-12 % de sucres tels que le saccharose ou la dextrose, et d'autres ingrédients traditionnels tels que 1 à 2 % de chlorure de sodium, jusqu'à 15 % d'amidons modifiés tels que des amidons modifiés de maïs ou de blé, jusqu'à 10 % de lait en poudre ou d'autre source de protéines, jusqu'à 0,5 % de sels minéraux, jusqu'à 0,5 % de vitamines, jusqu'à 2 % d'antioxydants et même, éventuellement, des enzymes qui peuvent réduire la viscosité du mélange devant être préparé, par exemple.

Pour fabriquer des aliments secs pour animaux, il est possible de préparer un mélange préalable sec comprenant au moins 50 % de farine ou de semoule de céréale, 25-35 % de farine de viande et des produits dérivés d'origine animale, 5-15 % de graisse et de suif, jusqu'à 10 % de produits dérivés d'origine végétale et jusqu'à 6 % de vitamines et de minéraux, par exemple.

Pour fabriquer, soit des céréales cuites, soit des aliments secs pour animaux, il est possible de préparer un mélange d'eau et de mélange préalable de façon telle que le mélange possède une teneur en eau de 10-40 % en poids, à l'aide d'un mélangeur à lame tournant rapidement, un mélangeur ou une extrudeuse à double vis s'engrènant et tournant ensemble, ou une extrudeuse à simple vis, par exemple.

Il est possible de cuire ce mélange en le chauffant à 80-200°C pendant 20 s à 180 min, à l'aide d'un dispositif de mélange et de cuisson tel qu'un mélangeur ou une extrudeuse à double vis s'engrenant et tournant ensemble, ou d'une extrudeuse à vis unique, et/ou d'un dispositif de cuisson tel qu'une cuve cylindrique à double enveloppe renfermant des moyens internes de transport tel qu'une vis d'Archimède, par exemple.

Préférablement, les diverses configurations de vis possibles des dispositifs mentionnés ci-dessus qui peuvent être utilisées pour mettre en oeuvre les présentes étapes de mélange et de cuisson, sont choisies de manière à soumettre ledit mélange à des forces de cisaillement relativement faibles. Ces vis comprennent généralement un arbre sur lequel des bilobes possédant chacun la forme d'une section de vis sont montés et fixés l'un sur l'autre. La longueur et le sens du pas de vis associé à un bilobe peuvent être choisis en fonction du type de travail que l'on désire effectuer, en de nombreuses zones successives et/ou alternées de la vis, un pas relativement long correspondant plutôt à une zone de mélange et un pas relativement court correspondant plutôt à une zone de cuisson, par exemple.

Il est possible de maintenir une pression inférieure à 2000 kPa, préférablement de 100 à 1000 kPa en amont de la pompe à engrenages, et de faire en sorte que la pompe à engrenages exerce une pression de 2000 à 20 000 kPa sur le mélange en amont de la filière, par exemple.

De manière à presser le mélange à travers ladite filière à extrusion, il est possible d'exercer la pression sur le mélange au cours de l'étape de cuisson, spécialement en raccordant la pompe à engrenages entre un dispositif de mélange et de cuisson et un dispositif de cuisson, par exemple. Dans une telle réalisation, le présent procédé permet l'utilisation d'un mélange ayant une teneur en matière sèche relativement élevée, ce qui signifie une viscosité relativement élevée, tout en utilisant un dispositif de cuisson qui lui-même ne serait pas capable de transporter un mélange de cette nature.

Il est possible d'accroître davantage la teneur en matière sèche en utilisant des enzymes qui abaissent la viscosité du mélange.

Une teneur en matière sèche relativement élevée, spécialement de 78 % à 90 %, peut être nécessaire si l'on souhaite obtenir un produit dilaté à la sortie de la filière, par exemple.

Il est également possible d'exercer la pression sur le mélange après l'étape de cuisson, en raccordant la pompe à engrenages entre un dispositif de mélange et de cuisson et la filière, par exemple.

La pompe à engrenages peut comprendre deux roues dentées ou rouleaux dentés qui s'engrènent mutuellement. Les deux rouleaux peuvent tourner dans un logement sur des essieux situés dans un plan perpendiculaire à la direction d'un courant de mélange. Ils peuvent tourner chacun en direction opposée, les dents s'écartant en amont et se fermant à nouveau en aval. Le bord extérieur des dents peut glisser contre une paroi intérieure correspondante dudit logement, définissant ainsi des espaces intersticiels destinés à transporter le mélange devant être extrudé en aval. La forme des dents peut être spécialement conçue pour éviter autant que possible tout frottement entre les dents qui s'engrènent mutuellement et tout cisaillement exercé sur le mélange transporté.

La pompe à engrenages est préférablement pourvue d'un corps à double enveloppe.

Il est possible de découper le cordon extrudé du mélange cuit en des granulés ou des boulettes juste à la sortie de la filière, à l'aide d'un dispositif de découpage tel qu'un couteau tournant, par exemple.

La filière à extrusion peut comprendre un ou plusieurs conduits d'extrusion, spécialement des conduits cylindriques, généralement orientés dans la même direction que celle d'un courant de mélange devant être extrudé, préférablement dans une direction perpendiculaire au plan dans lequel les essieux des rouleaux sont situés, par exemple. La forme du cordon extrudé peut être déterminée en particulier par la forme de l'ouverture ou de l'orifice de sortie desdits conduits.

La filière est préférablement enfermée dans un boîtier à double enveloppe dans lequel un fluide de refroidissement ou de chauffage peut être mis en circulation.

### Brève description des dessins

D'autres caractéristiques et avantages ressortiront de la description suivante faite en regard des dessins annexés, sur lesquels :
- la figure 1 est une vue schématique d'une réalisation dans laquelle la pompe à engrenages est raccordée entre un dispositif de mélange et de cuisson et un dispositif de cuisson ; et
- la figure 2 est une vue schématique d'une réalisation dans laquelle la pompe à engrenages est raccordée entre un dispositif de mélange et de cuisson et la filière à extrusion.

### Description détaillée de l'invention

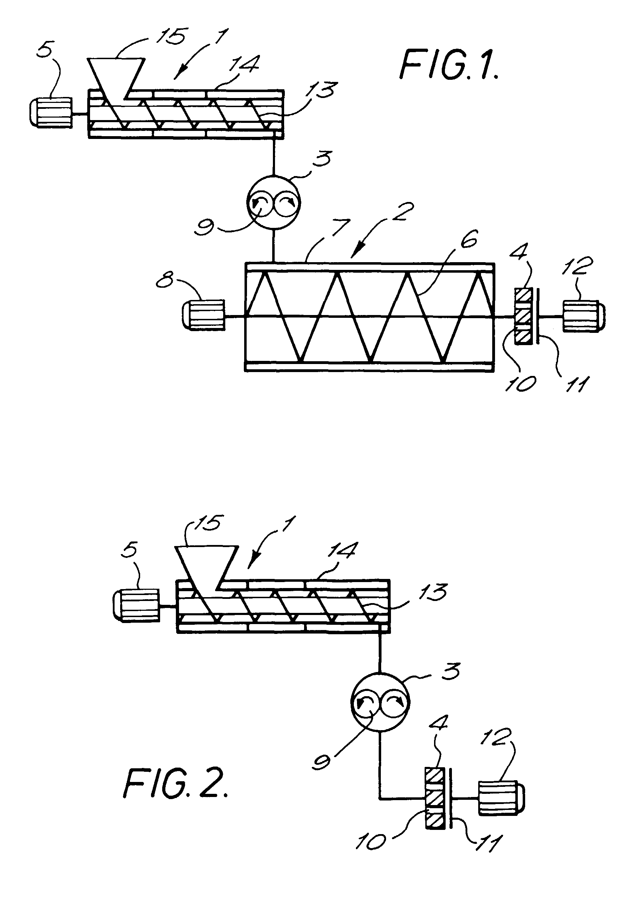

Dans la réalisation représentée sur la figure 1, l'appareil comprend un dispositif de mélange et de cuisson 1, un dispositif de cuisson 2, une pompe à engrenages 3 raccordée entre le dispositif de mélange et de cuisson 1 et le dispositif de cuisson 2, et une filière à extrusion 4.

Le dispositif de mélange et de cuisson 1 se trouve sous la forme de vis 13 qui s'engrènent mutuellement et tournent ensemble. En d'autres termes, les vis 13 tournent dans le même sens et s'engrènent mutuellement. Elles sont entraînées par un moteur 5. Elles sont enfermées dans un cylindre 14 ayant à son extrémité en amont une entrée 15 destinée à l'amenée d'eau et d'un mélange préalable sec. Des dispositifs appropriés sont commercialisés et peuvent être obtenus auprès de Wenger, Clextral, Teledyne et équivalents.

La pompe à engrenages 3 comprend deux rouleaux dentés 9 qui s'engrènent mutuellement. Des dispositifs appropriés sont commercialisés et peuvent être obtenus auprès de Maag.

Le dispositif de cuisson 2 comprend une cuve cylindrique 7 à double enveloppe renfermant une vis d'Archimède 6 entraînée par un moteur 8.

La filière à extrusion 4 comprend une plaque traversée par plusieurs conduits cylindriques 10. Un dispositif de découpage est prévu à la sortie de la filière 4 sous la forme d'un couteau tournant 11 entraîné par un moteur 12. Des filières à extrusion et des dispositifs de découpage appropriés sont bien connus dans l'art et peuvent être obtenus auprès de Wenger et Clextral, par exemple.

Dans la réalisation représentée sur la figure 2, l'appareil comprend un dispositif de mélange et de cuisson 1, une filière à extrusion 4 et une pompe à engrenages 3 raccordée entre le dispositif de mélange et de cuisson 1 et la filière à extrusion 4.

Le dispositif de mélange et de cuisson 1, la pompe à engrenages 3 et la filière à extrusion 4 sont similaires aux dispositifs correspondants décrits ci-dessus en se référant à la figure 1.

Le procédé selon la présente invention est décrit de façon plus détaillée dans les exemples présentés ci-dessous et donnés à titre d'illustration. Les pourcentages y sont donnés en poids.

### Exemple 1

Un agencement correspondant au mode de réalisation représenté sur la figure 1 a été utilisé, dans lequel le dispositif de mélange et de cuisson était un mélangeur TELEDYNE de type READCO à double vis s'engrenant mutuellement et tournant ensemble. Ce mélangeur avait un diamètre de vis de 127 mm et une longueur totale de traitement de 7,2 fois le diamètre de la vis. Il était entraîné par un moteur dont la vitesse était réglable entre 50 et 510 tr/min avec une puissance maximum de 37 kW. Son cylindre était thermiquement régulé à l'aide d'échangeurs de chaleur, soit à vapeur, soit à eau chaude.

La pompe à engrenages était une pompe Maag de type VACOREX VX 70/70. Elle était entraînée par un moteur dont la vitesse était réglable. Elle était pourvue d'un corps à double enveloppe qui était thermiquement régulé à l'aide d'un échangeur à eau chaude.

Le dispositif de cuisson était une cuve cylindrique à double paroi renfermant une vis d'Archimède. La température de la cuve à double enveloppe était régulée à l'aide d'un échangeur de chaleur à eau chaude.

La filière à extrusion était une plaque traversée par deux conduits cylindriques, chacun ayant un diamètre de 4 mm. Elle était enfermée dans un boîtier à double enveloppe qui était thermiquement régulé à l'aide d'un échangeur de chaleur à eau.

Le dispositif de découpage était un couteau tournant entraîné par un moteur dont la vitesse était réglable.

A l'aide de cet appareil, des céréales cuites ont été fabriquées de la manière suivante :

20 kg/h d'eau chauffée à 80°C et 50 kg/h d'un mélange préalable sec comprenant principalement de la semoule de maïs étaient amenés dans le dispositif de mélange et de cuisson. Le mélange préalable avait une teneur en eau d'environ 11 %. Le mélange constitué d'eau et du mélange préalable sec avait ainsi une teneur en eau d'environ 36,4 %.

La composition du mélange préalable était :
- semoule de maïs 88 %
- saccharose 8 %
- chlorure de sodium 2 %
- vitamines 0,5 %
- sels minéraux 0,5 %
- antioxydant 1 %

La vitesse de la vis du dispositif de mélange et de cuisson (n-mélange cuisson) était fixée à 200 tr/min. La température du cylindre du dispositif de mélange et de cuisson était maintenue entre 127 et 137°C. Le temps de séjour du mélange à l'intérieur du dispositif de mélange et de cuisson (t-mélange cuisson) était de 30 s. A l'extrémité du dispositif de mélange et de cuisson, le mélange était totalement sous forme de gélatine et il avait une température (T-mélange cuisson) de 104°C. La pression dans le dispositif de mélange et de cuisson et à l'entrée de la pompe à engrenages (p-engrenages) était de 100 kPa.

La vitesse des rouleaux dentés de la pompe à engrenages (n-engrenages) était fixée à 9 tr/min. La température du corps de la pompe à engrenages était maintenue à 100°C. Le temps de séjour du mélange sous forme de gélatine à l'intérieur de la pompe à engrenages était de 8 s.

La température de la double enveloppe du dispositif de cuisson était maintenue à 90°C. Le temps de séjour du mélange à l'intérieur du dispositif de cuisson était de 3 h. A l'extrémité du dispositif de cuisson, le mélange cuit était à une température de 84°C. La pression à l'extrémité du dispositif de cuisson et avant la filière à extrusion (p-filière) était de 2000 kPa.

La température du boîtier à double enveloppe de la filière à extrusion était maintenue à 90°C.

Les céréales cuites ainsi fabriquées étaient des pastilles partiellement dilatées et en forme de balles, prêtes à être traitées à l'aide d'un équipement supplémentaire en aval, de manière à être gonflées ou roulées en flocons, par exemple.

L'arôme et le goût du mélange se sont notablement améliorés au cours de son long temps de séjour dans le dispositif de cuisson. Avant d'entrer dans le dispositif de cuisson, le mélange sous forme de gélatine était d'un jaune clair et n'avait pas réellement l'arôme et le goût d'une céréale bien cuite. Après avoir quitté la cuve de cuisson, la couleur du mélange cuit était devenue un brun clair-jaune foncé et son arôme et son goût étaient plus appuyés, à savoir, similaires à ceux du pain venant d'être cuit.

Il est important de remarquer que le mélange se trouvait complètement sous la forme de gélatine, à savoir, complètement précuit avant d'entrer dans le dispositif de cuisson qui fonctionnait plutôt comme un dispositif de maintien sans transfert de chaleur additionnelle quelconque amenée au mélange.

Ainsi, une énergie spécifique entrée dans le mélange (E-mélange) peut être définie comme étant la somme de la consommation de puissance respective du dispositif de mélange et de cuisson (W-mélange cuisson) et de la pompe à engrenages (W-engrenages) divisée par le débit du mélange. Dans le présent exemple, W-mélange cuisson était de 9,8 kW, W-engrenages était de 0,8 kW et E-mélange était de 0,15 kWh/kg.

### Exemples 2 à 5

Un agencement correspondant au mode de réalisation représenté sur la figure 2 a été utilisé.

Dans l'Exemple 2, le dispositif de mélange et de cuisson était un mélangeur TELEDYNE du type READCO à double vis s'engrenant mutuellement et tournant ensemble, identique à celui utilisé dans l'Exemple 1.

Dans l'Exemple 3, le dispositif de mélange et de cuisson était une extrudeuse CLEXTRAL de type BC-72H à double vis s'engrenant mutuellement et tournant ensemble. Cette extrudeuse possédait un diamètre de vis de 88 mm et une longueur totale de traitement de 17 fois le diamètre de la vis. Elle était entraînée par un moteur dont la vitesse était réglable. Son cylindre était thermiquement régulé à l'aide de serpentins réchauffeurs à induction.

Dans l'Exemple 4, le dispositif de mélange et de cuisson était une extrudeuse à simple vis WENGER de type X-25. Cette extrudeuse possédait un diamètre de vis de 133 mm et une longueur totale de traitement de 8,8 fois le diamètre de la vis. Elle était entraînée par un moteur dont la vitesse était réglable. Son cylindre était thermiquement régulé à l'aide de serpentins réchauffeurs à induction.

Dans l'Exemple 5, le dispositif de mélange et de cuisson était un dispositif de dilatation KHAL du type OE 15.2 qui est un type d'extrudeuse à simple vis.

Dans l'Exemple 2, la composition du mélange préalable était la même que dans l'Exemple 1.

Dans les Exemples 3 et 4, la composition du mélange préalable était :
- semoule de maïs 25 %
- farine de riz 55 %
- saccharose 12 %
- amidon modifié de maïs 4 %
- chlorure de sodium 2 %
- vitamines 0,5 %
- sels minéraux 0,5 %
- antioxydant 1 %

Dans l'Exemple 5, la composition du mélange préalable était :
- semoule de maïs 50 %
- farine de viande et produits dérivés d'origine animale 29 %
- graisse et suif 9 %
- produits dérivés d'origine végétale 8 %
- vitamines, minéraux 4 %

Dans la totalité des Exemples 2 à 5, la pompe à engrenages était une pompe MAAG du type VACOREX VX 70/70. Elle était entraînée par un moteur dont la vitesse était réglable. Elle était raccordée à l'extrémité du dispositif de mélange et de cuisson et avant la filière. Elle était pourvue d'un corps à double enveloppe dans lequel une température de 120°C était maintenue à l'aide d'un système d'échangeur de chaleur à eau sous forte pression. La vitesse de ses rouleaux dentés était réglée de manière à maintenir une pression constante de 100-200 kPa à son entrée.

Le mélange sous forme de gélatine était pressé à travers une plaque de filière traversée par un ou plusieurs conduits d'extrusion cylindriques, chacun ayant quelques mm de diamètre (Exemples 2 à 4) ou des conduits d'extrusion en forme d'étoile (Exemple 5).

Les cordons de dilatation étaient découpés à la face de sortie de la filière en des pastilles en forme de boule ou en étoile, à l'aide d'un dispositif de découpage qui était une machine à pastiller standard CLEXTRAL.

Les différents paramètres de traitement sont présentés dans le tableau 1 ci-dessous dans lequel les abréviations utilisées correspondent à celles définies dans l'Exemple 1 :

**Tableau 1**

| Exemples n° | 2 | 3 | 4 | 5 |
|---|---|---|---|---|
| Débit d'eau (kg/h) | 18 | 18 | 37 | 90 |
| Débit du mélange sec (kg/h) | 83 | 230 | 150 | 350 |
| Teneur en eau du mélange (%) | 27 | 17,5 | 28,5 | 28,5 |
| t-mélange cuisson (s) | 30 | 20 | 35 | 30 |
| T-mélange cuisson (°C) | 132-142 | 139-148 | 124-134 | 120-140 |
| n-mélange cuisson (tr/min) | 200 | 286 | 315 | 330 |
| W-mélange cuisson (kW) | 11,6 | 30 | 24 | 33 |
| p-engrenages (kPa) | 100 | 100 | 200 | 150 |
| n-engrenages (tr/min) | 12 | 21,5 | 20,5 | 20 |
| W-engrenages (kW) | 0,8 | 1,4 | 1,3 | 1,2 |
| E-mélange (kWh/kg) | 0,115 | 0,122 | 0,131 | 0,073 |
| p-filière (kPa) | 4400 | 11400 | 8000 | 10500 |
| conduits de filière (mm) | 1 x 3,5 | 3 x 4 | 3 x 4 | |

Les céréales cuites fabriquées dans les Exemples 2 et 4 étaient des pastilles semi-dilatées en forme de balle, prêtes à être traitées à l'aide d'un équipement supplémentaire situé en aval de manière à être, soit gonflées, soit roulées en flocons, par exemple.

Les céréales cuites fabriquées dans l'Exemple 3 étaient des pastilles dilatées en forme de balle, prêtes à être traitées à l'aide d'un équipement supplémentaire situé en aval de manière à être rôties, par exemple.

La forme des pastilles fabriquées dans les Exemples 2 à 4 était similaire à, et leur arôme, goût et texture étaient également similaires à, mais pouvaient même être considérés comme s'étant améliorés comparés à, celle des pastilles correspondantes fabriquées sans le support de la pompe à engrenages. Les aliments secs pour animaux fabriqués dans l'Exemple 5 étaient des pastilles dilatées en forme d'étoile, prêtes à être traitées à l'aide d'un équipement supplémentaire situé en aval, de manière à être séchées et revêtues, par exemple.

## Revendications

1. Procédé de fabrication de céréales cuites ou d'aliments secs pour animaux, qui comprend la préparation d'un mélange d'eau et d'un mélange préalable sec constitué principalement de farine ou de semoule de céréale, la cuisson du mélange et son extrusion, caractérisé en ce que le mélange cuit est extrudé en étant pressé à travers une filière à extrusion à l'aide d'une pompe à engrenages.

2. Procédé selon la revendication 1, caractérisé en ce que la pression est exercée par la pompe à engrenages sur ledit mélange au cours de l'étape de cuisson.

3. Procédé selon la revendication 1, caractérisé en ce que la pression est exercée par la pompe à engrenages sur ledit mélange après l'étape de cuisson.

4. Procédé selon la revendication 1, caractérisé en ce qu'il comprend la préparation d'un mélange d'eau et dudit mélange préalable de façon telle que le mélange a une teneur en eau d'environ 10 à 40 % en poids, et la cuisson du mélange à une température de 80 à 200°C pendant 20 s à 180 min.

5. Procédé selon la revendication 1, caractérisé en ce qu'il comprend le maintien d'une pression inférieure à 2000 kPa, préférablement entre 100 et 1000 kPa en amont de la pompe à engrenages et en faisant en sorte que la pompe à engrenages exerce une pression comprise entre 2000 et 20 000 kPa sur ledit mélange en amont de la filière.

6. Appareil destiné à mettre en oeuvre le procédé selon l'une quelconque des revendications 1 à 5, caractérisé en ce qu'il comprend un dispositif de mélange et de cuisson, une pompe à engrenages et une filière à extrusion.

7. Appareil selon la revendication 6, caractérisé en ce qu'il comprend en outre un dispositif de cuisson situé en aval d'un dispositif de mélange et de cuisson.

8. Appareil selon la revendication 7, caractérisé en ce que ledit dispositif de mélange et de cuisson comprend un mélangeur ou une extrudeuse à double vis s'engrènant mutuellement et tournant ensemble, ledit dispositif de cuisson comprend une cuve cylindrique à double enveloppe renfermant une vis d'Archimède, et la pompe à engrenages est raccordée entre le dispositif de mélange et de cuisson et le dispositif de cuisson.

9. Appareil selon la revendication 7, caractérisé en ce que ledit dispositif de mélange et de cuisson comprend une extrudeuse à simple vis, ledit dispositif de cuisson comprend une cuve cylindrique à double enveloppe renfermant une vis d'Archimède, et la pompe à engrenages est raccordée entre le dispositif de mélange et de cuisson et le dispositif de cuisson.

## Claims

1. Process for producing cooked cereals or dried foodstuffs for animals, which comprises the preparation of a mixture of water and a previously dry mixture consisting principally of a cereal flour or semolina, cooking the mixture and extruding it, characterized in that the cooked mixture is extruded by being pressed through an extrusion die with the aid of a gear pump.

2. Process according to claim 1, characterized in that the pressure is exerted by the gear pump on the said mixture during the cooking step.

3. Process according to claim 1, characterized in that the pressure is exerted by the gear pump on the said mixture after the cooking step.

4. Process according to claim 1, characterized in that it includes preparing a mixture of water and the said previous mixture so that the mixture has a water content of approximately 10 to 40 % by weight, and cooking the mixture at a temperature of 80 to 200°C for 20 s to 180 min.

5. Process according to claim 1, characterized in that it includes holding a pressure below 2000 kPa, preferably between 100 and 1000 kPa upstream from the gear pump and doing this so that the gear pump exerts a pressure of between 2000 and 20 000 kPa on the said mixture upstream from the die.

6. Apparatus designed to implement the process according to any one of claims 1 to 5, characterized in that it comprises a mixing and cooking device, a gear pump and an extrusion die.

7. Apparatus according to claim 6, characterized in that it additionally includes a cooking device situated downstream from a mixing and cooking device.

8. Apparatus according to claim 7, characterized in that the said mixing and cooking device comprises a mixer or an extruder with two screws mutually meshing with each other and revolving together, the said cooking device comprises a cylindrical vessel with a double envelope enclosing an archimedean screw, and the gear pump is connected between i the mixing and cooking device and the cooking device.

9. Apparatus according to claim 7, characterized in that the said mixing and cooking device comprises a single screw extruder, the said cooking device comprises a cylindrical vessel with a double envelope enclosing an archimedean screw, and the gear pump is connected between the mixing and cooking device and the cooking device.

## Patentansprüche

1. Verfahren zur Herstellung von gekochten Cerealien oder von Trockennahrung für Tiere, das die Herstellung einer Mischung aus Wasser und einer trockenen Vormischung, die im wesentlichen aus Getreidemehl oder -grieß besteht, das Kochen der Mischung und ihre Extrusion umfaßt, dadurch gekennzeichent, daß die gekochte Mischung dadurch extrudiert wird, daß man sie mit Hilfe einer Zahnradpumpe durch eine Extrusionsdüse preßt.

2. Verfahren nach Anspruch 1, dadurch gekennzeichnet, daß der Pressdruck auf die Mischung mit Hilfe der Zahnradpumpe während des Kochschritts ausgeübt wird.

3. Verfahren nach Anspruch 1, dadurch gekennzeichnet, daß der Pressdruck auf die Mischung mit Hilfe der Zahnradpumpe nach dem Kochschritt ausgeübt wird.

4. Verfahren nach Anspruch 1, dadurch gekennzeichnet, daß es die Herstellung einer Mischung aus Wasser und der Vormischung auf eine solche Weise, daß die Mischung einen Wassergehalt von 10 bis 40 Gew.-% aufweist, und das Kochen der Mischung bei einer Temperatur von 80 bis 200°C für 20 s bis 180 min umfaßt.

5. Verfahren nach Anspruch 1, dadurch gekennzeichnet, daß es die Einhaltung eines Drucks unterhalb von 2000 kPa, vorzugsweise zwischen 100 und 1000 kPa, stromauf der Zahnradpumpe umfaßt und man dafür sorgt, daß die Zahnradpumpe auf die Mischung stromauf der Düse einen Druck zwischen 2000 und 20 000 kPa ausübt.

6. Vorrichtung zur Durchführung des Verfahrens nach irgendeinem der Ansprüche 1 bis 5, dadurch gekennzeichnet, daß sie eine Einrichtung zum Mischen und Kochen, eine Zahnradpumpe und eine Extrusionsdüse aufweist.

7. Vorrichtung nach Anspruch 6, dadurch gekennzeichnet, daß sie außerdem eine Einrichtung zum Kochen aufweist, die stromab einer Einrichtung zum Mischen und Kochen angeordnet ist.

8. Vorrichtung nach Anspruch 7, dadurch gekennzeichnet, daß die Einrichtung zum Mischen und Kochen einen Mischer oder Extruder mit einer Doppelschnecke mit gegenseitigem Eingriff und gleichsinniger Drehung umfaßt, die Einrichtung zum Kochen einen zylindrischen Behälter mit einer doppelten Umhüllung, in dem eine archimedische Schraube eingeschlossen ist, umfaßt, und die Zahnradpumpe zwischen der Einrichtung zum Mischen und Kochen und der Einrichtung zum Kochen montiert ist.

9. Vorrichtung nach Anspruch 7, dadurch gekennzeichnet, daß die Einrichtung zum Mischen und Kochen einen Einschneckenextruder umfaßt, die Einrichtung zum Kochen einen zylindrischen Behälter mit einer doppelten Umhüllung, in dem eine archimedische Schraube eingeschlossen ist, umfaßt, und die Zahnradpumpe zwischen der Einrichtung zum Mischen und Kochen und der Einrichtung zum Kochen montiert ist.
